# EUROPEAN PATENT APPLICATION

(11) **EP 2 544 457 A2**
(43) Date of publication of application: **09.01.2013**
(21) Application number: 12162428.2
(22) Date of filing: 30.03.2012
(51) Int. Cl.: H04N 13/02

(54) **3D image processing apparatus, implementation method of the same and computer-readable storage medium thereof**

(30) Priority: 05.07.2011 KR 20110066562
(71) Applicant: Samsung Electronics Co., Ltd., Suwon-si, Gyeonggi-do, 443-742 (KR)
(72) Inventor: Kwon, Oh-yun, Seoul (KR); Kim, Jae-cheol, Gyeonggi-do (KR); Heo, Hye-hyun, Gyonggi-do (KR)
(74) Representative: Robinson, Ian Michael

(57) **Abstract**

A three-dimensional (3D) image processing apparatus and method in which 3D image conversion information for an input image having a plurality of frames is generated, and the input image is converted into a 3D image by rendering a preview image of the 3D image based on the 3D image conversion information and a subset of frames of the input image of which the 3D image conversion information is generated.

## Description

### CROSS-REFERENCE TO RELATED APPLICATION

This application claims priority from Korean Patent Application No. 10-2011-0066562, filed on July 5, 2011 in the Korean Intellectual Property Office.

### BACKGROUND

### 1. Field

Apparatuses and methods consistent with the exemplary embodiments relate to a three-dimensional (3D) image processing apparatus, an implementation method of the same, and a computer-readable storage medium thereof, and more particularly, to a 3D image processing apparatus capable of converting a two-dimensional (2D) input image into a 3D image, an implementation method of the same, and a computer-readable storage medium thereof.

### 2. Description of the Related Art

In a related art image processing apparatus capable of converting a 2D image containing a plurality of frames into a 3D image, a user can ascertain whether a conversion-completed image is a 3D image through a display unit only after 3D conversion is completed with regard to all of the plurality of frames. However, when the 2D image is converted into the 3D image, it is more convenient if an image generated corresponding to some of the plurality of frames is enough to ascertain whether the 2D image is properly converted into the 3D image.

### SUMMARY

According to the present invention there is provided an apparatus and method as set forth in the appended claims. Other features of the invention will be apparent from the dependent claims, and the description which follows. One or more exemplary embodiments provide a 3D image processing apparatus, in which an image generated corresponding to some of the plurality of frames is enough to ascertain whether the 2D image is properly converted into the 3D image when the 2D image is converted into the 3D image, an implementation method of the same, and a computer-readable storage medium thereof.

According to an aspect of an exemplary embodiment, there is provided a three-dimensional (3D) image processing apparatus including: a display unit; an image converter which generates 3D image conversion information with regard to an input image comprising a plurality of frames, and converts the input image into a 3D image by rendering based on the generated 3D image conversion information; and a controller which controls the image converter to render a preview image of the 3D image from a subset of frames of which the 3D image conversion information is generated among the plurality of frames, and controls the display unit to display the preview image.

The 3D image processing apparatus may further include a user input unit, wherein if selection of a preview mode is input through the user input unit, the controller controls the image converter to render the preview from the subset of frames, of which the 3D image conversion information is generated prior to input of the selection.

The 3D image processing apparatus may further include a user interface (UI) generator which generates a first UI for selecting a preview display state, wherein if the selection of the preview mode is input, the controller controls the display unit to display the preview image in the preview display state selected by a user through the first UI.

The first UI for selecting the preview display state may include at least one of a first sub UI for selecting 2D or 3D display of the generated 3D image; a second sub UI for selecting whether to display the generated 3D image in the display unit or an external display apparatus; and a third sub UI for selecting at least one frame to be displayed among the frames corresponding to the generated 3D image.

The 3D image processing apparatus may further include a connection unit to which the external display apparatus is connected, wherein if the external display apparatus is selected through the second sub UI, the controller receives display recognition information of the external display apparatus, processes the generated 3D image in accordance with the received display recognition information and transmits the processed 3D image to the external display apparatus.

The 3D image processing apparatus may further include: a UI generator which generates a second UI for designating a predetermined area on the displayed 3D image; and a storage unit, wherein the controller controls the storage unit to store information about an area of the 3D image designated through the second UI.

If selection of the modification mode for the 3D image conversion information is input, the controller may control the UI generator to generate and display a third UI for user identification and 3D-image conversion information modification with regard to the input image based on information about the stored designated area.

If the 3D-image conversion information is modified through the third UI, the controller may control the image converter to convert the input image based on the modified 3D-image conversion information.

The 3D image conversion information may include at least one of image attribute information, key frame information, object extraction information and depth information.

According to an aspect of an exemplary embodiment, there is provided an implementation method of a three-dimensional (3D) image processing apparatus, the method including: generating 3D image conversion information with regard to an input image comprising a plurality of frames, and converting the input image into a 3D image by rendering based on the generated 3D image conversion information; rendering a preview image of the 3D image from a subset of frames of which the 3D image conversion information is generated among the plurality of frames; and displaying the preview image.

The rendering may include rendering the preview from the subset of frames, of which the 3D image conversion information is generated prior to input of the selection.

The method may further include generating a first UI for selecting a preview display state, wherein the displaying comprises displaying the preview image in the preview display state selected by a user through the first UI.

The first UI for selecting the preview display state may include at least one of a first sub UI for selecting 2D or 3D display of the generated 3D image; a second sub UI for selecting whether to display the generated 3D image in the display unit or an external display apparatus; and a third sub UI for selecting at least one frame to be displayed among the frames corresponding to the generated 3D image.

The method may further include receiving display recognition information of the external display apparatus, processing the generated 3D image in accordance with the received display recognition information and transmitting the processed 3D image to the external display apparatus if the external display apparatus is selected through the second sub UI.

The method may further include: generating and displaying a second UI for designating a predetermined area on the displayed 3D image; and storing information about an area of the 3D image designated through the second UI.

The method may further include generating and displaying a third UI for user identification and 3D-image conversion information modification with regard to the input image based on information about the stored designated area if selection of the modification mode for the 3D image conversion information is input.

The converting may include converting the input image based on the modified 3D-image conversion information if the 3D-image conversion information is modified through the third UI.

The 3D image conversion information may include at least one of image attribute information, key frame information, object extraction information and depth information.

According to an aspect of an exemplary embodiment, there is provided a storage medium for storing a program for executing a three-dimensional (3D) image processing method.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a schematic view of a system including a 3D image processing apparatus according to an exemplary embodiment;

FIG. 2 is a control block diagram of the 3D image processing apparatus according to an exemplary embodiment;

FIG. 3 illustrates a user interface (UI) generated by a UI generator 140 of the 3D image processing apparatus 100 according to an exemplary embodiment;

FIG. 4 illustrates display of a preview image in the 3D image processing apparatus 100 according to an exemplary embodiment;

FIG. 5 illustrates a UI generated by a UI generator 140 of the 3D image processing apparatus 100 according to an exemplary embodiment; and

FIG. 6 is a flowchart of control operation in the 3D image processing apparatus 100 according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

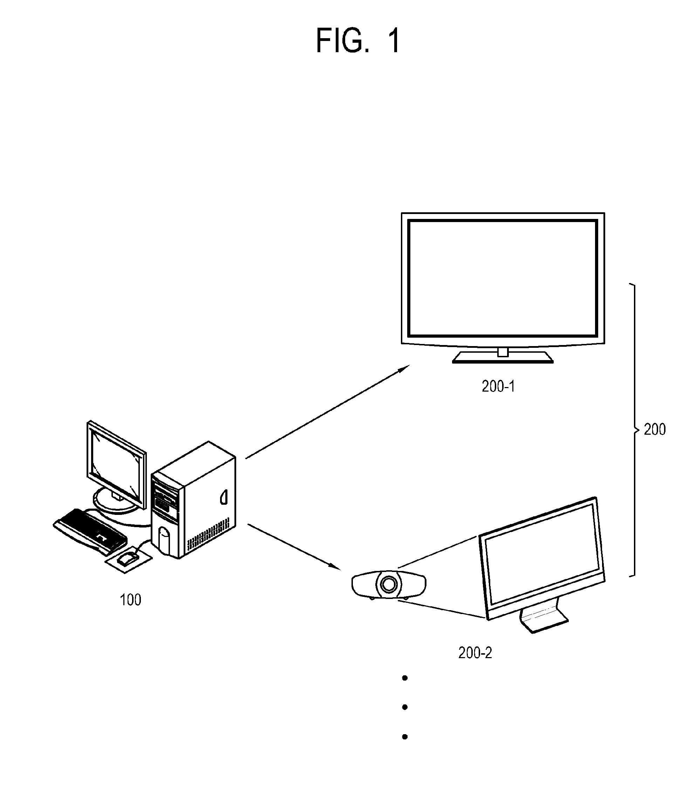

FIG. 1 is a schematic view of a system including a 3D image processing apparatus according to an exemplary embodiment.

A 3D image processing apparatus 100 may receive a monocular input image from an external source providing apparatus (not shown) or a storage medium (not shown) and convert the monocular input image into a binocular image. The monocular image involves a 2D image, and such terms may be used as mixed with each other. The binocular image involves a three-dimensional image (or a 3D image or a stereoscopic image), and such terms may be interchanged with each other. The 3D image processing apparatus 100 generates 3D image conversion information with regard to an input image, and performs rendering based on the generated 3D image conversion information, thereby converting a 2D image into a 3D image.

If the 3D image processing apparatus 100 receives a user's input about selection of a preview mode while converting an input image containing a plurality of frames into a 3D image, the 3D image processing apparatus 100 performs rendering with regard to some frames of which 3D-image conversion information is generated among the plurality of frames, and converts the input image into a 3D image so as to be displayed on a display unit 120. Here, the display unit 120 includes a display capable of displaying a 3D image. Also, the 3D image processing apparatus 100 may transmit the rendered 3D image to an external display apparatus 200. The external display apparatus 200 may include for example a 3D TV 200-1 including a large-sized display, a projector 200-2 capable of displaying a 3D image with a large-sized screen, etc. Thus, a user can detect an error, a mistake or the like that may occur during 3D image conversion while viewing some conversion-completed 3D images through the large-sized display. To correct the detected error and mistake, a user can modify the 3D image conversion information generated by the 3D image processing apparatus 100. Thus, the 3D image processing apparatus 100 may convert an input image into a 3D image based on the modified 3D image conversion information.

Here, a user includes an artist who converts an input image into a 3D image through the 3D image processing apparatus 100.

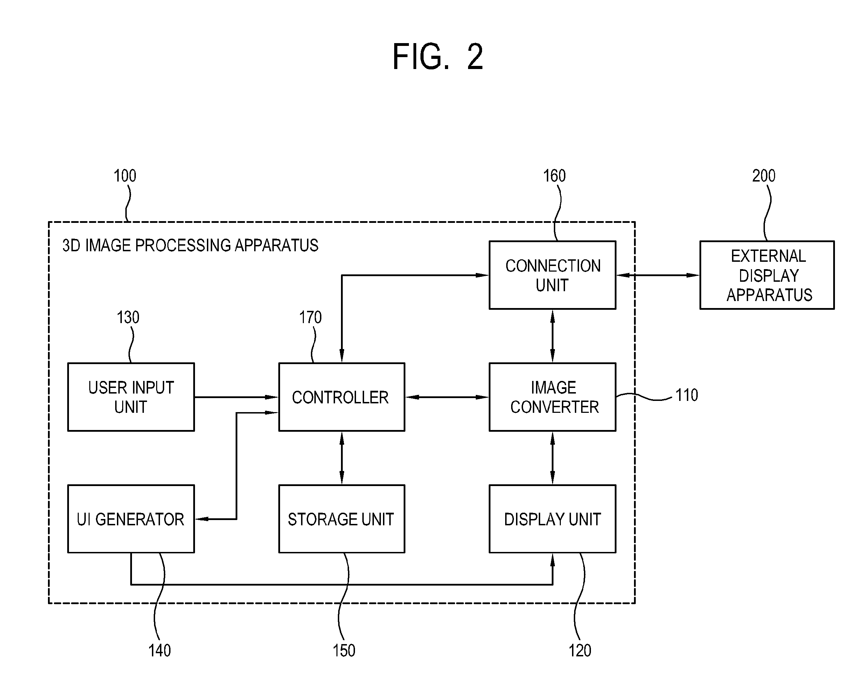

Below, the 3D image processing apparatus will be described in more detail with reference to FIG. 2.

As illustrated in FIG. 2, the 3D image processing apparatus 100 includes an image converter 110, a display unit 120, a user input unit 130, a UI generator 140, a storage unit 150, a connection unit 160, and a controller 170 that controls operations of the 3D image processing apparatus 100.

The 3D image processing apparatus 100 may include any type electronic apparatus capable of converting a monocular input image into a binocular image. Also, the 3D image processing apparatus 100 may include any electronic apparatus including a program for converting the monocular image into the binocular image. Such an electronic apparatus may include a display apparatus, for example, a personal computer (PC), etc.

The 3D image processing apparatus 100 may receive an input image, which may be a two-dimensional (2D) image, containing a plurality of frames from an external source providing apparatus (not shown) through a an interface such as, for example, an Ethernet interface (not shown). The 3D image processing apparatus 100 can communicate with the external source providing apparatus (not shown) over a predetermined wired or wireless network. Further, the 3D image processing apparatus 100 may receive an input image containing a plurality of frames from an external storage medium (not shown), such as a universal serial bus (USB) memory, a compact disc (CD), a Blu-Ray disc (BD), etc.

The 3D image converted from the input image by the 3D image processing apparatus 100 may be output by the 3D image processing apparatus 100 as a 3D image based on a shutter-glasses scheme or a 3D image based on polarization-glasses scheme. The shutter-glass scheme uses shutter glasses to achieve a 3D image, in which a display apparatus displays left and right images separately and the left and right images are recognized by respectively opening left and right glasses so as to provide a cubic effect. The polarization-glasses scheme uses polarization glasses to achieve a 3D image, in which a display apparatus includes a polarization filter and left and right images are respectively input to left and right eyes if viewed through polarization glasses having the same polarization as the filter, thereby giving a cubic effect. The image converter 110 of the 3D image processing apparatus 100 generates 3D image conversion information about an input image, performs rendering based on the generated 3D-image conversion information, and converts the format of the input image into a format corresponding to one of the shutter-glasses scheme and the polarization-glasses scheme, thereby generating a 3D image based on the shutter-glasses scheme or the polarization-glasses scheme.

The image converter 110 generates 3D image conversion information about an input image containing a plurality of frames, and performs rendering based on the generated 3D image conversion information, thereby converting the input image into a 3D image.

The 3D image conversion information includes at least one of image attribute information, key frame information, object extraction information and depth information. The image attribute information includes the brightness, color, and contrast of an image, position information about a pixel corresponding to a predetermined object contained in the image, etc. The key frame information includes a scene change frame, a frame in which an important object appears for the first time, a frame in which motion of an object is great, or the like among a plurality of frames constituting the input image. The object extraction information includes optional information of an object to which a depth value is assigned for giving a cubic effect to at least one object contained in a frame to be converted. The depth information includes a depth value to have a cubic effect.

If receiving input about selection of the preview mode through the user input unit 130, the image converter 110 performs rendering for a preview with regard to some frames (i.e., fewer than all the plurality of frames), of which 3D image conversion information is generated, among the plurality of frames under control of the controller 170. If receiving the input about the selection of the preview mode, the image converter 110 performs rendering for the preview with regard to some frames, of which 3D image conversion information is generated by time when the selection of the preview mode is input, among the plurality of frames. By performing the rendering, left-eye and right-eye images are generated substantially corresponding to some input images.

The image converter 110 may be achieved in the form of a predetermined image conversion program capable of substantially functioning as the foregoing image converter. If the image converter 110 is achieved in the form of a predetermined image conversion program, the image conversion program is stored in the storage unit 150 to be described later, and executed under control of the controller 170 as being loaded into a memory (e.g., RAM, ROM, etc., not shown).

The display unit 120 displays a 3D image corresponding to some frames of which rendering is completed by the image converter 110. When receiving input about selection of the preview mode through the user input unit 130, the display unit 120 may stereoscopically display a 3D image corresponding to some frames of which rendering is completed by the image converter 110 (hereinafter, the foregoing 3D image and a 'preview image' may also be used as mixed with each other), or two-dimensionally display separated left-eye and right-eye images, under the control of the controller 170.

Also, the display unit 120 displays a UI generated by the UI generator 140 to be described later. The display unit 120 may be achieved by, but is not limited to, various display types such as liquid crystal, plasma, a light-emitting diode, an organic light-emitting diode, a surface-conduction electron-emitter, a carbon nano-tube, nano-crystal, etc.

The user input unit 130 is used as a user interface to receive a user's selection about the function or operation of the 3D image processing apparatus 100. Thus, the 3D image processing apparatus 100 may receive input about selection of the preview mode or input about selection in the UI displayed on the display unit 120 through the user input unit 130. The user input unit 130 may include at least one key button, and may be achieved by a control or touch panel provided in the 3D image processing apparatus 100. Also, the user input unit 130 may be achieved in the form of a remote controller, a keyboard, a mouse or the like pointing device, etc. wired or wirelessly connected to the 3D image processing apparatus 100.

If the input about selection of the preview mode is received through the user input unit 130 under control of the controller 170, the UI generator 140 generates a first UI for selecting a preview display state and displays the UI for selecting the preview display state on the display unit 120. The first UI for selecting the preview display state includes at least one of a first sub UI for selecting 2D or 3D display of the generated 3D image, a second sub UI for selecting whether to display the generated 3D image in the display unit or the external display apparatus, and a third sub UI for selecting at least one frame to be displayed among the frames corresponding to the generated 3D image.

Also, if a preview image is displayed on the display unit 120 in response to the selection of the preview mode, the UI generator 140 generates a second UI for designating a predetermined area of the displayed preview image and displays the second UI on the display unit 120 under control of the controller 170.

Further, if selection of a modification mode for 3D image conversion information is input through the user input unit 130, the UI generator 140 generates a third UI for user identification and 3D image conversion information modification with regard to the input image on the basis of information about the area designated through the second UI, and displays the third UI on the display unit 120.

All Uls generated by the UI generator 140 may be generated in the form of a graphic user interface (GUI) that is displayed on the display unit 120.

The storage unit 150 stores information about a predetermined area of the preview image designated through the second UI generated by the UI generator 140. The information about the designated area may include, for example, information about pixel positions corresponding to the designated area in a corresponding frame. The storage unit 150 may store the image conversion program if the image converter 110 is provided in the form of the image conversion program.

The 3D image processing apparatus 100 may be connected with an external display apparatus 200 through the connection unit 160. Thus, the 3D image processing apparatus 100 and the external display apparatus 200 may communicate over a predetermined wired or wireless network, or be connected to each other locally. If the 3D image processing apparatus 100 connected with the external display apparatus 200 through the connection unit 160, the 3D image processing apparatus 100 receives display recognition information of the external display apparatus 200, processes the generated 3D image (or preview image) in accordance with the received display recognition information, and transmits the generated 3D image (or preview image) to the external display apparatus 200 under control of the controller 170.

The 3D image conversion apparatus 100 may connect with a plurality of external display apparatuses 200-1, 200-2, ... through the connection unit 160.

The controller 170, which can control the above-mentioned elements, may be provided in the form of a central processing unit (CPU) in the 3D image processing apparatus 100. Below, operations of the foregoing elements and the controller 170 will be described in more detail.

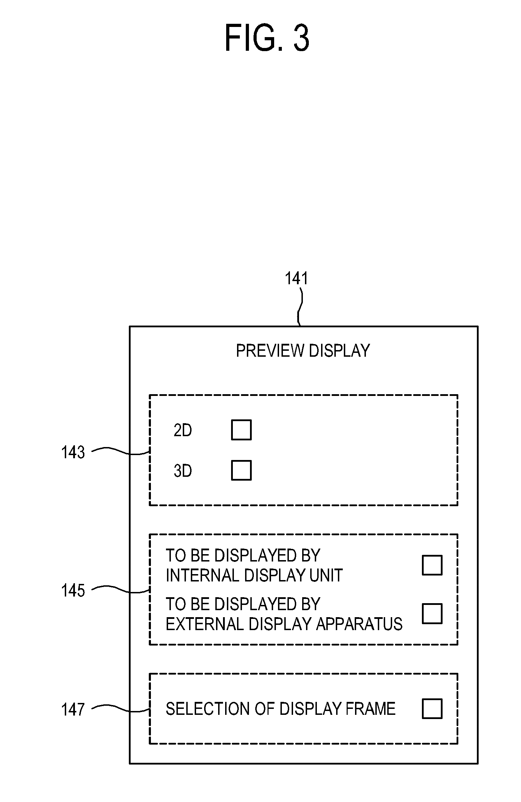

FIG. 3 illustrates a user interface (UI) generated by a UI generator 140 of the 3D image processing apparatus 100 according to an exemplary embodiment.

If input about selection of the preview mode is input through the user input unit 130 while an input image is converted into a 3D image, the controller 170 controls the UI generator 140 to generate the first UI 141 for selecting the preview display state and display the first UI on the display unit 120.

The first UI 141 for selecting the preview display state includes at least one of a first sub UI 143 for selecting 2D or 3D display of the generated 3D image (or preview image); a second sub UI 145 for selecting whether to display the generated 3D image in the display unit or the external display apparatus; and a third sub UI 147 for selecting at least one frame to be displayed among the frames corresponding to the generated 3D image.

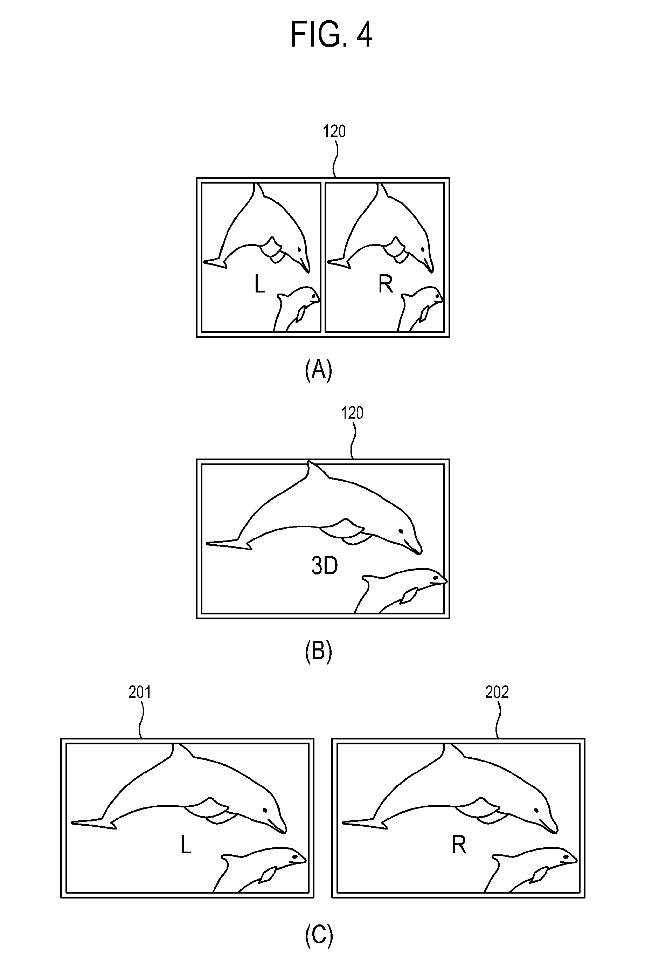

In the first sub UI 143, a user (or an artist) can select the 2D or 3D display through the user input unit 130. Referring to FIG. 4, it is as follows. FIG. 4 illustrates display of a preview image in the 3D image processing apparatus 100 according to an exemplary embodiment.

If a user selects the 2D display in the first sub UI 143, the controller 170 may separate and display a 3D image (or preview image) corresponding to some frames, of which 3D image conversion information is generated by the time when the selection of the preview mode is input, into left-eye and right-eye images (refer to A of FIG. 4).

The 2D display of the preview image offers an advantage that a user can easily detect an error in the 3D image conversion information generated by the image converter 110. For example, the error in the 3D image conversion information may include a mismatch between the left-eye image and the right-eye image. The mismatch may for example include a mismatch of image attribute information such as color, contrast, brightness, etc. in a predetermined area between the left-eye and right-eye images. Such a mismatch of the image attribute information may be that an area of the left-eye image and a corresponding area of the right-eye image are different in color, contrast, or brightness from each other.

Another example of the mismatch may be that there is a predetermined moved pixel between an area of the left-eye image and a corresponding area of the right-eye image. Such a case where the pixel positions are different may be caused by an object extraction error while the image converter 110 extracts an object.

Still another example of the mismatch may be that an area of the left-eye image and a corresponding area of the right-eye image are different in depth information. To ascertain the mismatch of the depth information, a user inputs a predetermined key through the user input unit 130 so that the depth map of the corresponding frame generated by the image converter 110 can be shown on the display unit 120 under control of the controller 170. The depth map may also be shown as divided into a depth map for the left-eye image and a depth map for the right-eye image. The depth map is represented as depth of black and white according to depth values, so that an area having a mismatched depth value can be easily ascertained.

If a user selects the 3D display in the first sub UI 143, the controller 170 may display a 3D image (or preview image) corresponding to some frames, of which 3D image conversion information is generated by the time when the selection of the preview mode is input, as a stereoscopic image (refer to B of FIG. 4).

The 3D display of the preview image offers an advantage that a user can easily ascertain whether the depth information is properly assigned in the 3D image conversion information generated by the image converter 110. The image converter 110 extracts an object to be assigned with a depth value assigned, and assigns the depth value to the extracted object. Through the preview image displayed as a 3D image, it is possible to ascertain whether the depth value is properly assigned to the object.

Through the second sub UI 145 included in the first UI 141 for selecting the preview display state as shown in FIG. 3, a user can select whether the preview image will be displayed in the internal display unit 120 or the external display apparatus 200.

If a user selects that the preview image will be displayed by the internal display unit 120 through the user input unit 130 in the second sub UI 145, the controller 170 may control the display unit 120 to display a 3D image (or preview image) corresponding to some frames of which 3D image conversion information is generated by the time when the selection of the preview mode is input.

On the other hand, if a user selects that the preview image will be displayed by the external display apparatus 200 through the user input unit 130 in the second sub UI 145, the controller 170 may transmit the preview image to the external display apparatus 200 so that a 3D image (or preview image) corresponding to some frames, of which 3D image conversion information is generated by the time when the selection of the preview mode is input, can be displayed by the external display apparatus 200. When the external display apparatus 200 is selected for the display in the second sub UI 145, the controller 170 receives display recognition information from the external display apparatus 200 connecting with the connection unit 160, processes the preview image in accordance with the received display recognition information, and transmits the processed preview image to the external display apparatus 200. The display recognition information may include display information, for example, extended display identification data (EDID) or the like of the external display apparatus 200.

If the 3D image processing apparatus 100 connects with the plurality of external display apparatuses via the connection unit 160, the controller 170 controls the UI generator 140 to generate a predetermined UI (not shown) for connection with the plurality of external display apparatuses and, and transmits the preview image to the external display apparatus selected by a user through the user input unit 130.

Further, if the 3D image processing apparatus 100 connects with the plurality of external display apparatuses via the connection unit 160 and the preview image is selected to be displayed as a 2D image, the controller 70 may respectively transmit left-eye and right-eye images corresponding to the preview image to different external display apparatuses in accordance with a user's selection (refer to C of FIG. 4). For example, the controller 170 may respectively transmit the left-eye image to a first external display apparatus 200-1 connected via the connection unit 160 and the right-eye image to a second external display apparatus 200-2 in accordance with a user's selection. Thus, the left-eye image is displayed on the display 201 of the first external display apparatus 200-1, and the right-eye image is displayed on the display 202 of the second external display apparatus 200-2.

The preview image transmitted to the external display apparatus 200 includes all UIs generated by the UI generator 130 under control of the controller 170. That is, the preview image displayable in the internal display unit 120, i.e., the image containing the UI, is transmitted to the external display apparatus 200. Thus, a user may use the UI containing items displayed in the display apparatus 200 and selectable by the user. At this time, a user can input a selection on the UI through an input device, such as a pointing device, a remote controller, or the like connected to the external display apparatus 200.

Through the third sub UI 147 contained in the first UI 141 for selecting the preview display state as shown in FIG. 3, at least one frame to be displayed in the display unit 120 or the external display apparatus 200 may be selected among the frames corresponding to the preview image. Through the third sub UI 147, a user can select at least one frame corresponding to a predetermined section among the plurality of frames corresponding to the preview image. For example, a user can select at least one frame corresponding to one scene through the third sub UI 147.

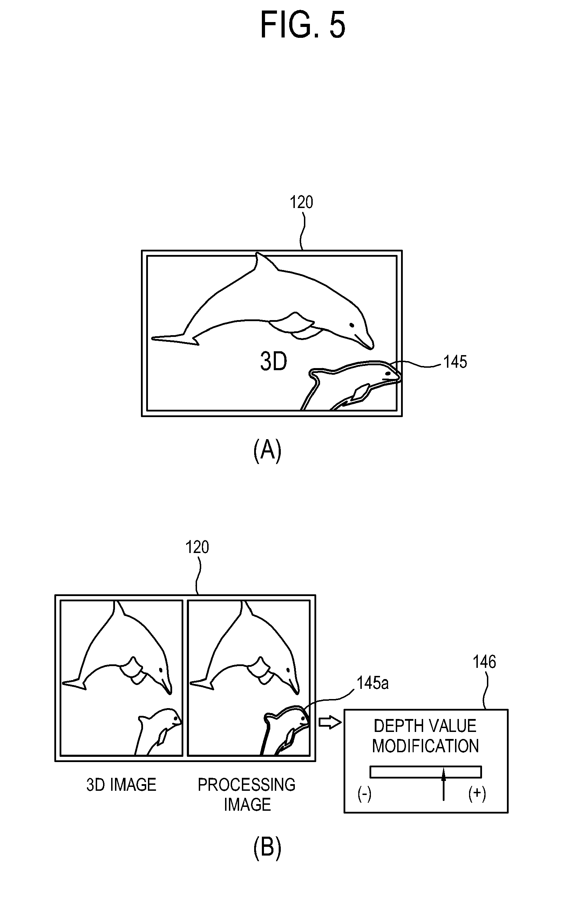

FIG. 5 illustrates a UI generated by a UI generator 140 of the 3D image processing apparatus 100 according to an exemplary embodiment.

In accordance with a user's selection using the first UI 141, the controller 170 displays the preview image on the display unit 120 or the external display apparatus 200, and controls the UI generator 140 to generate the second UI for designating a predetermined area to the displayed preview image and display the second UI on the preview image.

Through the second UI 155, a user can designate an area where there is an error in the 3D image conversion information or designate an area where the depth information has to be modified. The designated area may be designated in the form of a free curve, in which the second UI 155 may be achieved to facilitate designation of an indefinite area through a pointing device such as a mouse or the like (refer to A of FIG. 5).

If a predetermined area is designated on the preview image through the second UI 155, the controller 170 stores information about the designated area in the storage unit 150. Thus, the controller 170 stores information about pixel positions corresponding to the designated area in the storage unit 150.

Meanwhile, if selection of a modification mode for 3D image conversion information is input through the user input unit 130, the controller 170 controls a processing image for generating 3D image conversion information corresponding to an input image to be displayed on the display unit 120 of the 3D image processing apparatus 100 (See B of FIG. 5). In the case of the modification mode for the 3D image conversion information, an area of the display unit 120 displays the 2D input image, and the other area displays the processing image for generating the 3D image conversion information.

The controller 170 controls the UI generator 140 to generate and display a third UI 146 for user identification 145a and 3D image conversion information modification on an area corresponding to the designated area on the processing area, using information about a predetermined area stored in the storage unit 150 by a user. Then, a user can select a frame where the user identification UI 145a is displayed, while moving the frame with for example a wheel or left and right buttons provided in the user input unit 130.

As illustrated in (B) of FIG. 5, an example of the third UI in which the depth information can be modified. If the user identification UI 145a is selected through the user input unit 130, the third UI 146 in which the depth information can be modified is displayed, and thus a user can modify the depth value assigned to a corresponding area through the third UI 146. The third UI 146 shown in FIG. 5 is exemplified to allow the depth value to be modified by move of an arrow, but is not limited thereto. Alternatively, the depth value may be directly input. Accordingly, the third UI 146 may include any UI for receiving a user's selection.

Although (B) of FIG. 5 shows only the modification of the depth information, the third UI 146 may further include a sub UI for modifying all items capable of correcting an error in the 3D image conversion information. For example, the third UI 146 may further include a sub UI for modifying color, contrast, brightness, pixel positions, etc. in a designated area.

If the 3D image conversion information is modified through the third UI 146, the controller 170 controls the image converter 110 so that an input image can be converted based on the modified 3D image conversion information. Accordingly, the exemplary embodiments offer advantages that a user can ascertain through the preview mode whether an input image is converted into an optimum 3D image during the conversion from the input image into the 3D image, the 3D image conversion information is modified through the modification mode, and the 3D image is obtained reflecting the modification.

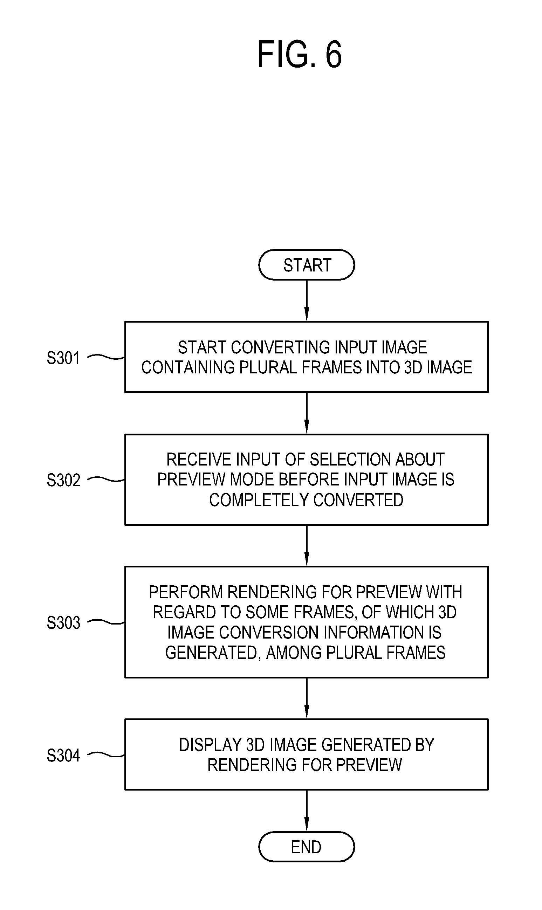

FIG. 6 is a flowchart of control operation in the 3D image processing apparatus 100 according to an exemplary embodiment.

Conversion from an input image containing a plurality of frames into a 3D image is started (S301), and if input about selection of a preview mode is input before completing the conversion of the input image (S302), rendering for a preview is carried out with regard to some frames of which 3D image conversion information is generated among the plurality of frames (S303). Then, the 3D image generated by the rendering for the preview is displayed (S304).

The method implemented by the 3D image processing apparatus according to an exemplary embodiment may be achieved in the form of a program executable by various computers and stored in a computer-readable storage medium. The computer-readable storage medium may include the single or combination of a program command, a data file, a data structure, etc. The program command recorded in the storage medium may be specially designed and configured for the present exemplary embodiment and usable by a person having a skill in the art of computer software. For example, the computer-readable storage medium includes magnetic media such as a hard disk, a floppy disk and a magnetic tape, optical media such as a compact-disc read only memory (CD-ROM) and a digital versatile disc (DVD), magnet-optical media such as a floptical disk, and a hardware device specially configured to store and execute the program command, such as a ROM, a random access memory (RAM), a flash memory, etc. For example, the program command includes not only a machine code generated by a compiler but also a high-level language code executable by a computer using an interpreter or the like. The hardware device may be configured to operate as one or more software modules for implementing the method according to an exemplary embodiment, and vice versa. Alternatively, the exemplary embodiments may be formed as computer-readable transmission media, such as carrier waves or signals, for transmission over a network, such as the Internet.

As described above, there are provided a 3D image processing apparatus, which can get a preview of a 3D image with regard to some frames having 3D image conversion information generated while converting a 2D image into the 3D image, modify the 3D image conversion information based on preview results, and convert the 2D image into a 3D image corresponding to the modified 3D image conversion information, an implementation method of the same and a computer-readable storage medium thereof.

According to the present invention there is provided an apparatus and method as set forth in the appended claims. Other features of the invention will be apparent from the dependent claims, and the description which follows.

## Claims

1. A three-dimensional (3D) image processing apparatus (100), comprising:
a display unit (120);
an image converter (110) which generates 3D image conversion information with regard to an input image comprising a plurality of frames, and converts the input image into a 3D image by rendering based on the generated 3D image conversion information; and
a controller (170) which controls the image converter (110) to render a preview image with regard to a subset of frames of which the 3D image conversion information is generated among the plurality of frames, and controls the display unit (120) to display the preview image.

2. The 3D image processing apparatus according to claim 1, further comprising a user input unit (130),
wherein if selection of a preview mode is input through the user input unit (130), the controller (170) controls the image converter (110) to render the preview image with regard to the subset of frames, of which the 3D image conversion information is generated by a time when the selection is input, among the plurality of frames.

3. The 3D image processing apparatus according to claim 2, further comprising a user interface (UI) generator (140) which generates a first UI for selecting a preview display state,
wherein if the selection of the preview mode is input, the controller (170) controls the display unit (120) to display the preview image with regard to the subset of frames in the preview display state selected by a user through the first UI.

4. The 3D image processing apparatus according to claim 3, wherein the first UI for selecting the preview display state comprises at least one of
a first sub UI for selecting 2D or 3D display of the generated 3D image;
a second sub UI for selecting whether to display the generated 3D image in the display unit or an external display apparatus (200); and
a third sub UI for selecting at least one frame to be displayed among the frames corresponding to the generated 3D image.

5. The 3D image processing apparatus according to claim 4, further comprising a connection unit (160) to which the external display apparatus (200) is connected,
wherein if the external display apparatus (200) is selected through the second sub UI, the controller (170) receives display recognition information of the external display apparatus (200), processes the generated 3D image in accordance with the received display recognition information and transmits the processed 3D image to the external display apparatus (200).

6. The 3D image processing apparatus according to any preceding claim, further comprising:
a UI generator (140) which generates a second UI for designating a predetermined area on the displayed 3D image; and
a storage unit (150),
wherein the controller (170) controls the storage unit (150) to store information about an area of the 3D image designated through the second UI.

7. The 3D image processing apparatus according to claim 6, wherein if selection of the modification mode for the 3D image conversion information is input, the controller (170) controls the UI generator (140) to generate and display a third UI for user identification and 3D-image conversion information modification with regard to the input image based on information about the stored designated area.

8. The 3D image processing apparatus according to claim 7, wherein if the 3D-image conversion information is modified through the third UI, the controller controls the image converter to convert the input image based on the modified 3D-image conversion information.

9. The 3D image processing apparatus according to claim 8, wherein the 3D image conversion information comprises at least one of image attribute information, key frame information, object extraction information and depth information.

10. An implementation method of a three-dimensional (3D) image processing apparatus, the method comprising:
generating 3D image conversion information with regard to an input image comprising a plurality of frames, and converting the input image into a 3D image by rendering based on the generated 3D image conversion information;
carrying out the rendering a preview image with regard to a subset of frames of which the 3D image conversion information is generated among the plurality of frames; and
displaying the preview image generated by the rendering.

11. The method according to claim 10, wherein the rendering comprises rendering the preview with regard to the subset of frames, of which the 3D image conversion information is generated by time when the selection is input, among the plurality of frames.

12. The method according to claim 11, further comprising generating a first UI for selecting a preview display state,
wherein the displaying comprises displaying the preview image generated by the rendering with regard to the subset of frames in the preview display state selected by a user through the first UI, and
wherein the first UI for selecting the preview display state comprises at least one of a first sub UI for selecting 2D or 3D display of the generated 3D image;
a second sub UI for selecting whether to display the generated 3D image in the display unit or an external display apparatus; and
a third sub UI for selecting at least one frame to be displayed among the frames corresponding to the generated 3D image.

13. The method according to claim 12, further comprising receiving display recognition information of the external display apparatus, processing the generated 3D image in accordance with the received display recognition information and transmitting the processed 3D image to the external display apparatus if the external display apparatus is selected through the second sub UI.

14. The method according to claim 10, further comprising:
generating and displaying a second UI for designating a predetermined area on the displayed 3D image; and
storing information about an area of the 3D image designated through the second UI.

15. The method according to claim 14, further comprising generating and displaying a third UI for user identification and 3D-image conversion information modification with regard to the input image based on information about the stored designated area if selection of the modification mode for the 3D image conversion information is input,
wherein the converting comprises converting the input image based on the modified 3D-image conversion information if the 3D-image conversion information is modified through the third UI.
